# EUROPEAN PATENT SPECIFICATION

(11) **EP 1 943 493 B1**
(45) Date of publication and mention of the grant of the patent: **26.05.2010**
(21) Application number: 05813670.6
(22) Date of filing: 10.10.2005
(51) Int. Cl.: G01L 19/04

(54) **PRESSURE SENSOR**
DRUCKSENSOR
CAPTEUR DE PRESSION

(43) Date of publication of application: 16.07.2008
(73) Proprietor: Gefran S.p.A., 25050 Provaglio d'Iseo (Brescia) (IT)
(72) Inventor: CIBINETTO, Lucio, I-20048 Carate Brianza, MONZA BRIANZA (IT); FAGNANI, Giorgio, I-25020 Azzano Mella, BRESCIA (IT); DRERA, Lionello, I-25049 Iseo, BRESCIA (IT)
(74) Representative: Leihkauf, Steffen Falk
(86) International application number: PCT/IT2005/000589
(87) International publication number: WO 2007/043068

(56) References cited:
- EP-A- 0 430 445
- US-A- 5 068 635
- US-A1- 2004 231 425
- US-A1- 2004 255 683

## Description

The object of the present invention is a pressure sensor, particularly a transducer for detecting the pressure of a fluid, for example a molten polymer material within an extruder. In this particular , application, the pressure sensor is crewed within a measurement cavity opened to the extrusion chamber and an elastically yielding membrane of the sensor is directly in contact with the molten material that reaches temperatures up to 350°C - 500°C. The membrane is deformed depending on the pressure of the molten material and transmits this deformation by means of suitable transmission means to a sensitive member, for example a chip made of a piezoresistive material being arranged within the sensor. The sensitive element is supported by a plate or basement of isolating material, for example ceramic, different from the material of the membrane and housing, which is normally high temperature-resistant steel.

As the temperature increases, the steel housing, which has a higher coefficient of heat expansion than the coefficient of heat expansion of the ceramic basement, will become longer than the basement supporting the sensitive member, thereby involving a reduction in the transmission means preload on the sensitive member. This preload reduction results in a measurement error varying depending on the temperature and pressure of the fluid.

To avoid measurement errors due to the uneven thermal expansion of the sensor, pressure sensors have been provided in which the materials used all have approximatively the same coefficient of heat expansion. This solution requires the use of special expensive materials, which have to meet at the same time a number of requirements that are often inconsistent with each other, such as high temperature resistance, mechanical strength, heat expansion, isolation characteristics, weldability or bondability.

Furthermore, pressure sensors have been provided having components of various materials that are combined such as to balance the uneven heat expansion in order to obtain a preload of the transmission means on the sensitive member which is substantially independent from temperature variation. A sensor of this type, such as described in the European patent application n. 04425889 (not yet published) comprises a support basement for the sensitive member, which is arranged on the opposite side relative to the membrane, which basement consists of an isolating support and one or more further portions having such coefficients of heat expansion to balance the difference of heat expansion between the steel housing and the insulating support of the sensitive member.

This solution has the drawback that the considerable total length of the basement implies either an elongation of the sensor, and hence an increase in size and material consumption, or the sensitive member approaching the membrane and hence an area where the sensor abuts against its own seat in the measurement cavity. Such an arrangement of the sensitive member is disadvantageous, because the sensitive member is within the sensor hottest area and is further exposed to disturbance factors connected both to the sensor being clamped within its own seat and the thermal deformations of the seat.

A further solution provided in EP 0 855 585 A2 for measuring the pressure in a combustion chamber of an internal combustion engine where, contrary to this application field, it is desired that the sensitive member is approached to the membrane as much as possible, provides a coupling disc having relatively high coefficient of heat expansion as the transmission means such as to balance uneven heat expansion. The coupling disc is slidably accommodated within the housing and rests, on the one side, on the membrane and, on the other side, on the sensitive member.

however, this solution is also not satisfactory in terms of pressure measurement requirements for the extrusion chambers operating in different temperature ranges, according to the molten material. The coupling disc inevitably is likely to jam as the temperature increases and to be guided and oriented in an imprecise manner at a lower temperature.

Prior art document US 2004/255 683 A1 discloses a pressure sensor having features of the preamble of claim 1

In view of the problems relative to the prior art described herein, the object of the present invention is to provide a sensor for measuring the pressure of fluids at high temperatures with such characteristics to minimize the measurement errors.

This and other objects are achieved by means of a pressure sensor comprising:

a housing defining an inner space and suitable to be mounted in a measurement cavity of an application;

- a sensitive member arranged in the inner space of the housing, said sensitive member being deformable and suitable to generate an indication signal for this deformation;

- a membrane arranged on a measurement side of the sensor and connected to the housing, said membrane being deformable as a function of a pressure acting on the measurement side of the sensor;

- a tip arranged within the inner space between the membrane and the sensitive member and suitable to deform the sensitive member depending on the membrane deformation;

- a support body supporting the sensitive member such that the latter is clamped with a preset preload between the tip and the support body,

wherein the support body has a coefficient of heat expansion different from that of the first material,

and wherein the tip is rigidly connected to the membrane and comprises a balance portion having a coefficient of heat expansion different from those of the housing and support body, the pressure sensor further comprising the additional features of claim 1.

This allows balancing the longitudinal thermal deformations in a however available space, moving the sensitive member away from the membrane without increasing the total length of the sensor, releasing the support body from its balance function and ensuring an undisturbed and precise transmission of the membrane deflection to the sensitive member. This results in a reduction in the measurement errors due to thermal effects, a reduction in the sensor length and a better separation of the functions which allows using materials which are less expensive, such as conventional components, and which are in any case more suitable to perform the particular function.

In order to better understand the invention and appreciate the advantages thereof, several exemplary, non limiting embodiments will be described herein below with reference to the figures in which:

Fig. 1 is a longitudinal sectional view of a pressure sensor according to an embodiment of the invention;

Fig. 2 is a longitudinal sectional view of a detail of the sensor from Fig. 1;

Fig. 3 is a longitudinal sectional view of a further detail of the sensor from Fig. 1;

Fig. 4 is a top view of a detail in Fig. 3;

Fig. 5 is a longitudinal sectional view of a further embodiment of the invention.

With reference to the figures, a pressure sensor, generally designated with numeral 1, comprises a housing 2 defining an inner space 3 and means for connecting the sensor 1 to a measurement cavity 6 of an application, such as an extruder 7. The connecting means preferably comprise a sealing surface 4 and a threaded nipple or other threaded means (not shown) suitable to clamp the sensor by means of the sealing surface 4 against a corresponding seat 5 of the measurement cavity 6.

In the inner space 3 of the housing there is arranged a sensitive member 8, such as a deformable piezoresistive chip and suitable to generate an electric indication signal for this deformation. The sensitive member 8 is supported by an isolating member 9 with a basement 10 connected to the housing 2 such as to provide a substantially rigid support for the sensitive member 8 within the sensor.

The sensor has an overall elongated shape along a longitudinal axis L and a sensitive end 11 that defines a measurement side thereof and is intended to be exposed to the pressure to be measured, i.e. in direct contact with the fluid, such as a molten polymer within an extrusion chamber.

The sensitive end 11 comprises a membrane 12 that may be deformed depending on the pressure acting on the measurement side. The membrane 12 is connected to the housing 2 such as to define, together with the latter, the inner space 3.

A tip 13 is arranged within the inner space 3 between the membrane 12 and the sensitive member 8 such that the sensitive member is deformed depending on the membrane deformation and, consequently, depending on the fluid pressure.

The isolating member 9 and the basement 10 are arranged on the opposite side of the sensitive member 8 relative to the tip 13 and positioned such that the sensitive member 8 is clamped with a preset preload between the tip and the isolating member.

Advantageously, the housing is made of a first material or combination of materials having coefficient of heat expansion αt,1 and the isolating member 9 with the basement 10 is of a second material or combination of materials having a coefficient of heat expansion αt,2 different from that of the first material and the tip 13 is rigidly connected to the membrane 12 and comprises a balance portion 14 of a third material or combination of materials having a coefficient of heat expansion αt,3 different from those of the first and second materials.

This allows balancing the longitudinal heat deformation by means of the tip in a space within the sensor that otherwise would not be used, moving the sensitive member from the membrane without increasing the total length of the sensor, releasing the isolating member with the basement from the thermal expansion balancing function and avoiding the guide means for the tip, ensuring an undisturbed and precise transmission of the deflection of the membrane to the sensitive member. This results in a reduction in the measurement errors due to thermal.effects, a reduction in the sensor length and a better separation of the functions allowing for the use of materials which are less expensive, such as standard components, and which are in any case more suitable to perform the particular function.

In accordance with an embodiment, the coefficient of heat expansion of the first material is higher than that of the second material and lower than that of the third material, i.e. αt,2 < αt,1 < αt,3. Particularly, the coefficient of heat expansion of the entire tip 13 is higher than the coefficient of heat expansion of the housing.

Advantageously, this allows using materials having high thermal and mechanical strength for the housing and the membrane, preferably steel and/or titanium alloys (for example 15-5 PH H900 steel with αt,1 = 11,6 × 10⁻⁶ K⁻¹) and conventional materials for the support body, for example alumina (αt,2 = 4,0 × 10⁻⁶ K⁻¹) for the isolating member and Kovar (a FE, Ni, Co alloy with αt,2 = 4,9 × 10⁻⁶ K⁻¹) for the basement. For the balance portion 14 of the tip 13 a conventional material may also be used, such as 304L steel (αt,3 = 18,3×10⁻⁶ K⁻¹) or aluminum. The balance of thermal deformations in order to obtain a preload, and consequently a deformation of the sensitive member not depending on the temperature, can be obtained by suitably selecting the length of the balance portion 14.

To the purpose, the tip may be advantageously formed in two portions and particularly an elongated base portion 20 overhanging from the membrane towards the sensitive member and the balance portion 14, also elongated, which is rigidly connected, such as by means of laser welding to the base portion 20. The connection of the balance portion 14 to the base portion 20 and, hence, at some distance from the membrane, avoids any negative effect by the welding on the membrane and deflection characteristics thereof. Furthermore, by manufacturing the membrane 12 together with the base portion 20 of the tip, a very precise central positioning can be obtained and a precise reference point is provided for aligning and connecting the balance portion 14 which is also the point of the tip.

According to an embodiment, the total length of the tip 13, i.e. the distance between the membrane 12 and the sensitive member 8 is greater than the longitudinal extension of the insulating element 9 with the basement 10.

This allows moving the sensitive member away from a connecting portion 15 that forms the sealing surface 4 without increasing the length of the sensor, and furthermore arranging the space required to be able to form the connecting portion 15 sufficiently large to avoid any deformation in the sensor that may derive from the clamping.

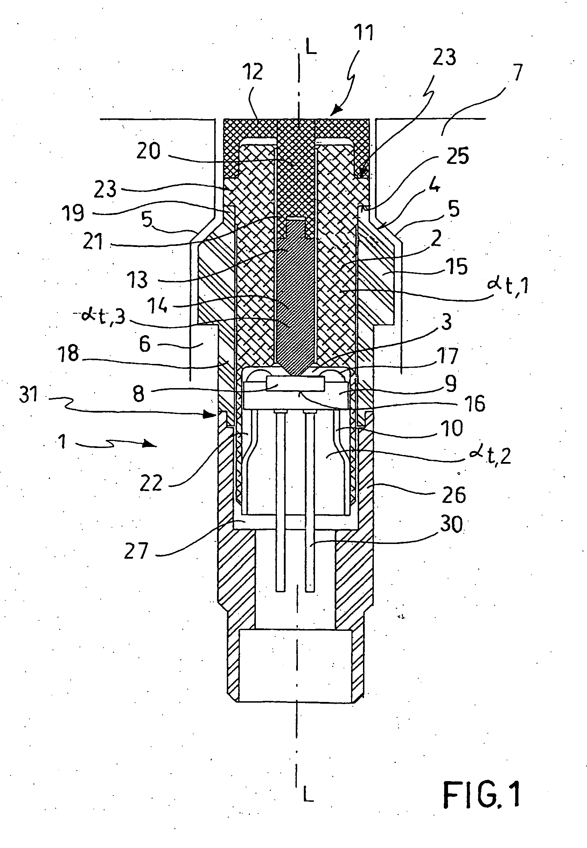

In order to decrease the effect of the high temperature and mechanical constraints by the membrane on the point of the tip and, consequently, the sensitive member, a tip is advantageously arranged with a greater length than the transversal extension of the membrane 12, as may be seen for example in Fig. 1.

In accordance with a particularly advantageous embodiment, the sensitive member 8 is arranged freely rested, preferably in pressing contact on the whole surface, within a seat 16 formed within the isolating member 9 such as to uncouple the deformations of the isolating member 9 from the deformation of the sensitive member 8.

The sensitive member 8 is held in a centered position within the seat 16 due to the preload of the tip 13 and, advantageously, due to a plurality of electric conductors 17 yieldingly connecting the sensitive members 8 to the isolating member 9 and aligning them relative to each other.

Preferably, 4 metal conductors are provided which are arranged on four sides of the sensitive member 8.

According to the preferred embodiment, the sensor 1 comprises, besides the housing 2, a further substantially tubular envelope 18 being the connecting portion 15 with the sealing surface 4 and further comprises a front portion 19 being arranged downstream of the sealing surface 4 in the direction of the measurement side, such that, when the sealing surface 4 is clamped against the seat 5 of an extruder, the front portion freely protrudes in the extrusion chamber.

The housing 2 is accommodated with clearance within the envelop 18 and connected only to the front portion 19 of the same, such as to allow, to a certain extent, relative displacements between the envelope 18 and the housing 2.

Due to the connection of the housing 2 with the front portion 19 of the envelope the housing can be isolated from the deformations of the connecting portion 15, which are due both to the clamping and thermal deformations of the seat 5. By removing the effects of the deformations of the seat 5 and the clamping deformations, this embodiment avoids any misalignment of the tip and the housing and thus allows using relatively long tips that protrude without further guide means from the membrane towards the sensitive member.

This allows providing pressure sensors in which the longitudinal distance between the sensitive member 8 and the sealing surface 4 is greater than the longitudinal distance between the membrane 12 and the sealing surface with the advantage that the sensitive member can be arranged in an area out of the connecting portion, without having to reduce the size of the connecting portion.

In the embodiment illustrated in Fig. 1, the housing 2 has a tubular elongated shape defining the inner space 3 comprising a cylindrical front portion 21 of small diameter that accommodates the tip 13 without contact, and a cylindrical rear portion 22 having a greater diameter than the front portion 21 and accommodating the sensitive member 8 supported by the isolating member 9 with the basement 10. In the outer surface of the housing 2, at the front portion 19 there is formed a circumferential flange 23 for connecting the housing 2 with the envelope 18 and the membrane 12 for example by means of welding.

The membrane 12 in the shape of a cup is partially inserted above the housing 2 and connected, by means of laser welding, to a front surface 24 of the flange 23. The tip 13 is formed as one piece with the membrane 12 and extends without contact through the front portion 21 of the inner space and rests in pressing contact against the sensitive member 8.

The envelope 18 abuts with a front surface of its front portion 19 against a rear surface 25 of the flange 23 of the housing and is connected thereto by means of laser welding. The connecting portion 15 of the envelope has a wall thickness greater than the wall thickness of the front portion 19 and a rear portion 26, opposite the front portion. The rear portion 26 defines a space 27 containing conductors or electrical connectors for supplying the sensitive member and transferring signals from the sensitive member to an external processing system.

As may be seen in Fig. 1, the rear portion of the envelope 18 is advantageously made in two pieces connected to each other, for example by means of welding, such as to provide a localized connecting area 31 having a greater flexibility than that of the two adjacent pieces of the rear portion. This contributes to prevent that uneven constraints and deformations or misalignments due to the handling of the sensor when being installed on the application may propagate towards the sensor measurement side.

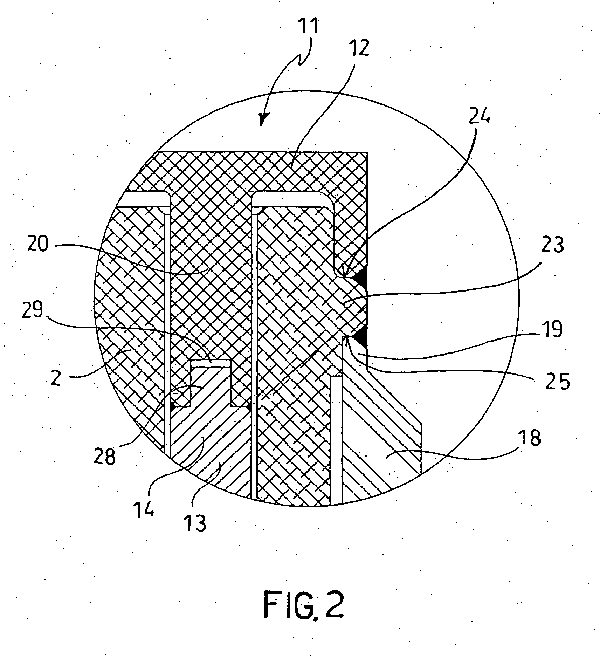

The rigid connection between the balance portion 14 and the base portion 20 of the tip 13 is obtained by means of welding (Fig. 2), preferably by means of laser welding. To ensure a perfect concentricity of the whole tip relative to the membrane, the base portion 20 is formed together with the membrane from one individual piece, such as by means of turning and preferably the ends of the base portion and the balance portion that are connected by means of welding comprise an alignment reference point, such as a centering pin 28 formed at the balance portion and a corresponding concentric seat 29 formed in the base portion 20.

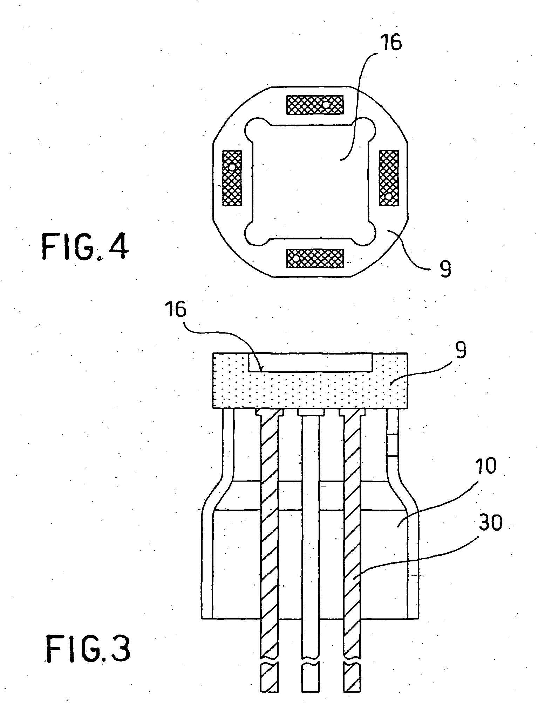

Figures 3 and 4 illustrate an embodiment of the support structure of the sensitive member, i.e. the plate-shaped isolating member 9 with the substantially square seat 16 and the bell-shaped basement 10 encompassing electric wires 30. The basement 10 is integrally connected to the isolating member, such as by brazing or bonding, on the surface of the isolating member opposite the seat 16.

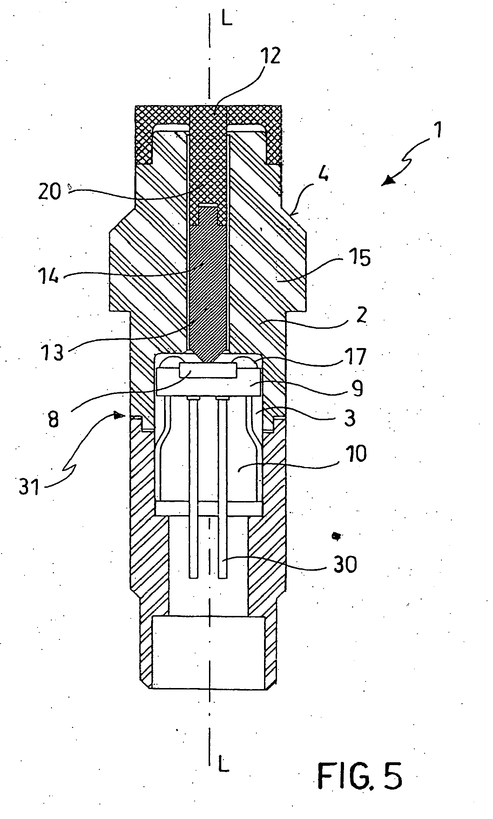

Fig. 5 illustrates an embodiment without the envelope, in which the connecting portion 15 is directly formed on the outer surface of the housing 2. The characteristics and advantages of the connecting portion 15 and the envelope described with reference to the embodiment illustrated in Fig. 1 are also applied to the connecting portion and the shape of the housing in the embodiment from Fig. 5, since a part of this housing serves as the envelope in the embodiment shown in Fig. 1.

## Claims

1. A pressure sensor (1) having an overall elongated shape along a longitudinal axis (L) and comprising:
- a housing (2);
- a sensitive member (8) that is deformable and suitable to generate an indication signal for this deformation;
- a membrane (12) connected to the housing (2), said membrane (12) being deformable depending on a pressure acting on the sensor measurement side;
- a tip (13) arranged between the membrane (1 2) and the sensitive member (8) and suitable to deform the sensitive member (8) depending on the deformation of the membrane (12);
- a support body (9, 10) supporting the sensitive member (8) such that the latter is clamped with a preset preload between the tip (13) and the support body (9, 10), wherein the support body (9, 10) has a coefficient of heat expansion (α_{1,2}) different from that (α_{t,1}) of the housing, wherein
the tip (13) is rigidly connected to the membrane (12) and comprises a balance portion (14) having a coefficient of heat expansion (α_{t,3}) different from that (α_{t,1}) of the housing (2) and different from that (α_{t,2}) of the support body (9, 10),
**characterized in that**:
- said tip (13) has a greater longitudinal length both than the longitudinal extension of said support body (9, 10) and the transversal extension of said membrane (12) with respect to said longitudinal axis (L) and
- said sensitive member (8) is arranged freely rested within a seat (16) being formed in the support body (9) such as to substantially uncouple the deformations of the sensitive member (8) from the deformations of the support body (9, 10), wherein a plurality of electric conductors (17) elastically connect and align the sensitive member (8) to the support body (9).

2. The sensor (1) according to claim 1, wherein the coefficient of heat expansion (α_{t,1}) of the housing is higher than that (α_{t,2}) of the support body (9, 10) and lower than that (α_{t,2}) of the balance portion (14).

3. The sensor according to claim 1 or 2, wherein the tip (13) comprises an elongated base portion (20) overhanging from the membrane (12) towards the sensitive member (8) and the balance portion (14), also elongated, is rigidly connected to the base portion (20).

4. The sensor (1) according to any preceding claim, comprising means for connecting the sensor (1) in a measurement cavity (6) of an application.

5. The sensor (1) according to the preceding claim, wherein the connecting means (18, 15) comprise a substantially tubular envelope (18) comprising:
- a front portion (19) arranged on the measurement side;
- a connecting portion (15) with a sealing surface (4) intended to be clamped against a corresponding seat (5) of the measurement cavity (6) to isolate the measurement side in a pressure-sealed manner,
wherein the housing (2) is accommodated with clearance within the envelope (18) and connected only with its front portion (19) such that relative displacements between the connecting portion (15) and the housing (2) are allowed.

6. The sensor (1) according to claim 5, wherein the longitudinal distance between the sensitive member (8) and the sealing surface (4) is greater than the longitudinal distance between the membrane (12) and the sealing surface (4).

7. The sensor (1) according to claim 4, wherein the housing (2) is welded to the front portion (19) of the envelope.

8. The sensor (1) according to ciaim 3, wherein the balance portion (14) is welded to the base portion (20) of the tip (13).

## Patentansprüche

1. Drucksensor (1), der eine insgesamt längliche Form entlang einer Längsachse (L) aufweist und enthält:
- ein Gehäuse (2);
- ein Fühlerelement (8), das verformbar und dazu geeignet ist, ein Anzeigesignal für diese Verformung zu erzeugen;
- eine Membran (12), die mit dem Gehäuse (2) verbunden ist, wobei die Membran (12) in Abhängigkeit eines Druckes verformbar ist, der auf die Sensormessseite einwirkt;
- eine Spitze (13), die zwischen der Membran (12) und dem Fühlerelement (8) angeordnet und dazu geeignet ist, das Fühlerelement (8) in Abhängigkeit der Verformung der Membran (12) zu verformen;
- einen Haltekörper (9, 10), der das Fühlerelement (8) derart hält, dass letzteres mit einer voreingestellten Kraft zwischen die Spitze (13) und den Haltekörper (9, 10) geklemmt ist, wobei der Haltekörper (9, 10) einen Wärmeausdehnungskoeffizienten (α_{t,2}) hat, der sich von jenem (α_{t,1}) des Gehäuses unterscheidet, wobei
die Spitze (13) starr mit der Membran (12) verbunden ist und einen Ausgleichsabschnitt (14) enthält, der einen Wärmeausdehnungskoeffizienten (α_{t,3}) hat, der sich von jenem (α_{t,1}) des Gehäuses (2) und jenem (α_{t,2}) des Haltekörpers unterscheidet,
**dadurch gekennzeichnet, dass**:
- die Spitze (13) eine größere Längsausdehnung sowohl als die Längsausdehnung des Haltekörpers (9, 10) als auch die Querausdehnung der Membran (12) im Bezug auf die Längsachse (L) aufweist und
- das Fühlerelement (8) frei ruhend in einem Sitz (16), der in dem Haltekörper (9) ausgebildet ist, derart angeordnet ist, dass es im wesentlichen die Verformungen des Fühlerelementes (8) von den Verformungen des Haltekörpers (9, 10) entkoppelt, wobei eine Vielzahl elektrischer Leiter (17) das Fühlerelement (8) mit dem Haltekörper (9) verbinden und mit diesem ausrichten.

2. Sensor (1) nach Anspruch 1, bei dem der Wärmeausdehnungskoeffizient (α_{t,1}) des Gehäuses größer als der (α_{t,2}) des Haltekörpers (9, 10) und geringer als der (α_{t,3}) des Ausgleichsabschnittes (14) ist.

3. Sensor nach Anspruch 1 oder 2, bei dem die Spitze (13) einen länglichen Basisabschnitt (20) enthält, der von der Membran (12) zum Fühlerelement (8) hervorsteht, und der Ausgleichsabschnitt (14), ebenfalls länglich, mit dem Basisabschnitt (20) starr verbunden ist.

4. Sensor (1) nach einem der vorhergehenden Ansprüche, enthaltend Einrichtungen, die den Sensor (1) in einem Messhohlraum (6) eines Gerätes befestigen.

5. Sensor (1) gemäß dem vorhergehenden Anspruch, bei dem die Befestigungseinrichtungen (18, 15), eine im wesentlichen röhrenförmige Umhüllung (18) enthalten, die umfasst:
- einen vorderen Abschnitt (19), der auf der Messseite angeordnet ist; und
- einen Verbindungsabschnitt (15) mit einer Dichtungsfläche (4), die dazu bestimmt ist, gegen einen entsprechenden Sitz (5) des Messhohlraumes (6) geklemmt zu werden, um die Messhohlraumsseite druckdicht abzusperren,
wobei das Gehäuse (2) mit einem Zwischenraum innerhalb der Umhüllung (18) aufgenommen und lediglich mit seinem vorderen Abschnitt (19) derart verbunden ist, dass Relativverschiebungen zwischen dem Verbindungsabschnitt (15) und dem Gehäuse (2) möglich sind.

6. Sensor (1) nach Anspruch 5, bei dem der Längsabstand zwischen dem Fühlerelement (8) und der Dichtungsfläche (4) größer ist als der Längsabstand zwischen der Membran (12) und der Dichtungsfläche (4).

7. Sensor (1) nach Anspruch 4, bei dem das Gehäuse (2) an den vorderen Abschnitt (19) der Umhüllung geschweißt ist.

8. Sensor (1) nach Anspruch 3, bei dem der Ausgleichsabschnitt (14) an den Basisabschnitt (20) der Spitze (13) geschweißt ist.

## Revendications

1. Capteur (1) de pression ayant une forme allongée globale le long d'un axe (L) longitudinal et comprenant:
un boîtier (2);
un organe sensible (8) qui peut se déformer et est approprié pour générer un signal d'indication pour cette déformation;
une membrane (12) reliée au boîtier (2), ladite membrane (12) étant déformable en fonction d'un pression agissant côté mesure du capteur;
une pointe (13) agencée entre la membrane (12) et l'organe sensible (8) et approprié pour déformer l'organe sensible (8) en fonction de la déformation de la membrane (12);
un corps (9, 10) de support soutenant l' organe sensible (8) de sorte que ce dernier soit serré avec une précharge prédéfinie entre la pointe (13) et le corps (9, 10) de support, où le corps (9, 10) de support a un coefficient d'expansion thermique (α_{t,2}) différent de celui (α_{t,2}) du boîtier, où
la pointe (13) est rigidement reliée à la membrane (12) et comprend une partie (14) d'équilibre ayant un coefficient d'expansion thermique (α_{t,3}) différent de celui (α_{t,1}) du boîtier (2) et différent de celui (α_{t,2}) du corps (9, 10) de support,
**caractérisé en ce que**:
ladite pointe (13) a une longueur longitudinale supérieure à l'extension longitudinale dudit corps (9, 10) de support et à l'extension transversale de ladite membrane (12) par rapport audit axe (L) longitudinal, et
ledit organe sensible (8) est agencé de sorte à reposer librement sur un siège (16) qui est formé dans le corps (9, 10) de support de sorte à découpler essentiellement les déformations de l'organe sensible (8) des déformations du corps (9, 10) de support, où une pluralité de conducteurs électriques (17) relient et alignent élastiquement l'organe sensible (8) au corps (9, 10) de support.

2. Capteur (1) selon la revendication 1, dans lequel le coefficient d'expansion thermique (α_{t,1}) du boîtier est supérieur à celui (α_{t,2}) du corps (9, 10) de support et inférieur à celui (α_{t,3}) de la partie (14) d'équilibre.

3. Capteur selon la revendication 1 ou 2, dans lequel la pointe (13) comprend une partie (20) de base allongée faisant saillie de la membrane (12) vers l'organe sensible (8) et la partie (14) d'équilibre, également allongée, est rigidement reliée à la partie (20) de base.

4. Capteur (1) selon l'une des revendications précédentes, comprenant un moyen destiné à relier le capteur (1) dans une cavité (6) de mesure d'une application.

5. Capteur (1) selon les revendications précédentes, dans lequel le moyen (18, 15) de raccordement comprend une enveloppe (18) essentiellement tubulaire comprenant:
une partie avant (19) agencée côté mesure;
une partie (15) de raccordement avec une surface (4) d'étanchéité prévue pour être fixée contre un siège correspondant (5) de la cavité (6) de mesure pour isoler le côté de mesure de manière scellée par pression,
où le boîtier (2) est reçu avec jeu dans l'enveloppe (18) et relié uniquement avec sa partie avant (19) de sorte à permettre des déplacements relatifs entre la partie (15) de raccordement et le boîtier (2).

6. Capteur (1) selon la revendication 5, dans lequel la distance longitudinale entre l'organe sensible (8) et la surface (4) d'étanchéité est supérieure à la distance longitudinale entre la membrane (12) et la surface (4) d'étanchéité.

7. Capteur (1) selon la revendication 4, dans lequel le boîtier (2) est soudé à la partie avant (19) de l'enveloppe.

8. Capteur (1) selon la revendication 3, dans lequel la partie (14) d'équilibre est soudée à la partie (20) de base de la pointe (13).
